# EUROPÄISCHE PATENTSCHRIFT

(11) **EP 2 132 440 B1**
(45) Veröffentlichungstag und Bekanntmachung des Hinweises auf die Patenterteilung: **13.07.2016**
(21) Anmeldenummer: 08708743.3
(22) Anmeldetag: 06.02.2008
(51) Int. Cl.: F03D 7/02

(54) **ANTRIEBSEINRICHTUNG ZUM ANTREIBEN VON MEHREREN ACHSEN**
DRIVE DEVICE FOR DRIVING SEVERAL AXLES
DISPOSITIF D'ENTRAÎNEMENT POUR ENTRAÎNER PLUSIEURS ESSIEUX

(30) Priorität: 13.02.2007 DE 102007006966
(43) Veröffentlichungstag der Anmeldung: 16.12.2009
(73) Patentinhaber: ROBERT BOSCH GMBH, 70469 Stuttgart (DE)
(72) Erfinder: LENGL, Karl, 97816 Lohr (DE); SPATZ, Bernd, 63857 Waldaschaff (DE); BECKER, Stephan, 63762 Grossostheim (DE)
(74) Vertreter: Thürer, Andreas
(86) Internationale Anmeldenummer: PCT/EP2008/051451
(87) Internationale Veröffentlichungsnummer: WO 2008/098864

(56) Entgegenhaltungen:
- EP-A- 0 008 584
- WO-A-2005/021962
- WO-A-2005/116445
- DE-A1-102005 034 899
- DE-U1- 20 020 232
- US-A- 4 426 192

## Beschreibung

### TECHNISCHES GEBIET

Die vorliegende Erfindung betrifft eine Antriebseinrichtung zum Antreiben von mehreren Achsen und insbesondere eine elektrische Antriebseinrichtung zum Antreiben von mehreren Achsen, die zum Beispiel für ein elektrisches Verstellen von Rotorblättern einer Windenergieanlage anwendbar ist.

### STAND DER TECHNIK

Es ist bekannt, einen Anstellwinkel von Rotorblättern eines Rotors einer Windenergieanlage zum Optimierten einer Energieabgabe des Rotors der Windenergieanlage, zum sicheren Stillsetzen des Rotors im Fall eines fehlerhaften Betriebs usw. zu verstellen. Die dazu verwendeten Antriebe werden als Pitchantriebe bezeichnet. Es kommen immer öfter elektrische Antriebe zum Einsatz. Insbesondere bürstenlose Elektroantriebe sind wegen der für ihren Betrieb erforderlichen komplexen Regelgeräte nur bedingt ausfallsicher. Daher legt man hier besonderen Wert darauf, einen Ausfall eines solchen Antriebs zuverlässig zu erkennen. Jedoch soll auch bei Gleichstromantrieben oder hydraulischen Antrieben ein Ausfall eines Reglers eindeutig erkannt werden.

Im Allgemeinen werden die Rotorblätter unabhängig voneinander verstellt. Dies bedeutet, dass für jedes Rotorblatt eine eigene Regeleinrichtung vorgesehen ist, die unabhängig von den Regeleinrichtungen für die anderen Rotorblätter arbeitet. Ein üblicher Systemaufbau sieht vor, dass diese Regeleinrichtungen im Drehzahlregelbetrieb arbeiten und dass eine übergeordnete Regeleinrichtung vorhanden ist, die für jedes Rotorblatt eine Positionsregelung vornimmt. Die Positions-Sollwerte werden von einer wiederum übergeordneten Leitstelle zum Beispiel in Abhängigkeit von der Windgeschwindigkeit festgelegt.

Zum Erfassen eines Istwerts eines Neigungswinkels jedes Rotorblatts muss mindestens ein Drehwinkelsensor vorgesehen sein. Um eine Redundanz sicher zu stellen, können jedoch zwei Drehwinkelsensoren vorgesehen sein. Ein Drehwinkelsensor erfasst unmittelbar einen Drehwinkel, das heisst einen Neigungswinkel, eines Rotorblatts und ein anderer Drehwinkelsensor erfasst einen Drehwinkel des gleichen Rotorblatts mittelbar über einen Drehwinkel eines Elektromotors, der dazu dient, den Drehwinkel des Rotorblatts zu verstellen. Die derart erfassten Istwerte des Drehwinkels jedes Rotorblatts werden der übergeordneten Regeleinrichtung zugeführt, um eine Positionsregelung durchzuführen.

Ein herkömmliches Steuerungssystem zur Steuerung der Rotorblätter einer Windkraftanlage ist beispielsweise aus der DE 102005034899A1 bekannt. Dieses System weist eine Zentralsteuereinrichtung auf. Die Einzelpitcheinrichtungen der einzelnen Rotorblätter leiten Informationen bezüglich der Position der Rotorblätter über eine Kommunikationsverbindung an die Zentralsteuereinrichtung. Zwar sind die Einzelpitcheinrichtungen hierbei auch miteinander verbunden, die Steuerungsfunktion liegt im Rahmen dieses hierarchischen Steuerungsmodells jedoch klar bei der Zentralsteuereinrichtung.

Auch die US 4426192 offenbart ein zentrales Steuerungssystem mit einer zentralen Steuerungseinrichtung.

Weiterhin ist aus der EP0008584 ein Steuerungssystem mit einer zentralen übergeordneten Steuerungseinrichtung bekannt. Die Steuerungseinrichtung integriert hierbei mehrere Ströme unterschiedlicher Informationsmodalitäten.

In den eingangs bschriebenen Systemen bildet die übergeordnete Regeleinrichtung eine Schwachstelle. Bei einem Defekt dieser im Schaltbild zentral angeordneten Regeleinrichtung ist ein sicheres Verstellen der Rotorblätter zum Beispiel zu einer Fahnenstellung unter Umständen nicht gewährleistet. Zudem ist keine von dieser zentralen Regeleinrichtung unabhängige Überwachung realisiert.

Dadurch kann insgesamt kein sicherer Betrieb der Windenergieanlage sicher gestellt werden.

### AUFGABE DER ERFINDUNG

Es ist demgemäß die Aufgabe der vorliegenden Erfindung, die vorhergehenden Nachteile im Stand der Technik zu beseitigen und eine Antriebseinrichtung zum Antreiben von mehreren Achsen zu schaffen, die einen sicheren Betrieb ermöglicht.

### KURZFASSUNG DER ERFINDUNG

Diese Aufgabe wird mit den in Anspruch 1 angegebenen Maßnahmen gelöst.

Weitere vorteilhafte Ausgestaltungen der vorliegenden Erfindung sind Gegenstand der abhängigen Ansprüche.

Gemäß Anspruch 1 besteht durch Verwenden des eine Position der zweiten Achse anzeigenden Erfassungssignals die Möglichkeit, dieses eine Position der zum Beispiel eines Antriebs eines Rotorblatts einer Windenergieanlage durch eine unabhängige Kontrollinstanz durchzuführen.

Weiterhin kann gemäß Anspruch 1 anstelle einer separaten Sicherheitssteuerung die externe Überwachung einer Achse durch eine Regeleinrichtung einer weiteren Achse übernommen werden. Der Hardwareaufwand ist gegenüber den herkömmlichen Systemen geringer, da die Regeleinrichtung ohnehin einen Mikrokontroller aufweist. Dieser kann in der Regel ohne Weiteres ein Überwachungsprogramm noch zusätzlich ausführen. Die Überwachung alleine des Positions-Istwerts lässt schon eine Überprüfung zum Beispiel hinsichtlich erlaubter Istwertintervalle oder die Überwachung eines erwarteten Geschwindigkeitsprofils zu.

Gemäß Anspruch 2 und 3 entspricht eine gegenseitige Überwachung zweier oder mehrerer Antriebe einer dezentralen, verteilten Überwachung, was zu einer höheren Ausfallsicherheit führt. Falls vorzugsweise die Regeleinrichtungen wie üblich über eine eigene Diagnosefunktion verfügen, wird hierdurch ebenso eine Redundanz geschaffen.

Gemäß Anspruch 4 überwacht jede Regeleinrichtung genau eine andere Regeleinrichtung, so dass eine Verteilung der Last hinsichtlich der benötigten Rechenleistung gegeben ist.

Gemäß Anspruch 5 ist eine Überwachungseinrichtung integriert, was mittels eines Hardwaremoduls oder vorzugsweise mittels einer Software eines Mikrokontrollers realisiert sein kann. Hierdurch können schon mit einem Positions-Istwert gewisse Fehler, zum Beispiel ein längerer Stillstand, nicht erlaubte Istwerte usw., erkannt werden.

Gemäß Anspruch 6 bestehen weitere Prüfmöglichkeiten zum Beispiel durch eine dezentrale Erfassung des Statussignals der zweiten Regeleinrichtung, eines Istwertvergleichs zwischen dem Positionssensor der Regeleinrichtung und dem zusätzlichen Positionssensor oder eines Sollwert/Istwert-Vergleichs. Auch kann bei einer synchronen Sollwertvorgabe der eigene Sollwert zur Prüfung der anderen Regeleinrichtung dienen.

Gemäß Anspruch 7 wird eine verteilte, dezentrale Überwachung geschaffen, wobei ein Zusatzmodul oder eine Software für diese geringen Aufwand erfordert und alle Achsen mit der gleichen Regeleinrichtung ausgestattet sein können.

Gemäß Anspruch 8 wird eine sogenannten Reißleine geschaffen, die einen eigenen zuverlässigen Kommunikationskanal aufweist. Jede Regeleinrichtung kann eine Fehlfunktion melden, was einen Sicherheitsablauf im gesamten System auslöst.

Gemäß Anspruch 9 sorgt eine integrierte Schaltvorrichtung, welche nur einen geringen zusätzlichen Hardwareaufwand erfordert, dafür, dass die häufigsten Ausfallszenarien, insbesondere ein Versagen eines Leistungsteils einer Regeleinrichtung, abgefangen werden.

Gemäß den Ansprüchen 10 bis 12 kann eine Kommunikation zwischen den Regeleinrichtungen untereinander bzw. zwischen Regeleinrichtungen und Einrichtungen einer übergeordneten Ebene durchgeführt werden.

Gemäß Anspruch 13 und 14 wird eine Verteilung und Dezentralisierung der Überwachung erreicht, da die Regeleinrichtungen voneinander getrennt vorgesehen sind. Die verteilte Natur der Überwachung wird dadurch verstärkt, dass die Regeleinrichtungen alle erforderlichen Steuer-, Überwachungs- und Regelfunktionen zumindest für die von Ihnen überwachten Achsen durchführen.

Gemäß Anspruch 15 wird für jede Regeleinrichtung eine unabhängige Energieversorgung sichergestellt, was eine Betriebsicherheit erhöht.

Gemäß Anspruch 16 wird der Betrieb im Fall eines Ausfalls einer externen Energieversorgung sicher gestellt.

Gemäß Anspruch 17 und 18 kann eine zuverlässige Regelung unterschiedlicher Systeme erzielt werden.

### KURZE BESCHREIBUNG DER ZEICHNUNGEN

Die vorliegende Erfindung wird nachstehend anhand von Ausführungsbeispielen unter Bezugnahme auf die beiliegenden Zeichnungen näher erläutert.

Es zeigt:
Fig. 1 eine schematische Ansicht einer Antriebseinrichtung zum Antreiben von mehreren Achsen gemäß einem ersten Ausführungsbeispiel der vorliegenden Erfindung;
Fig. 2 eine schematische Ansicht einer unterbrechungsfreien Stromversorgung der Antriebseinrichtung zum Antreiben von mehreren Achsen gemäß dem ersten Ausführungsbeispiel der vorliegenden Erfindung; und
Fig. 3 eine schematische Ansicht einer Antriebseinrichtung zum Antreiben von mehreren Achsen gemäß einem zweiten Ausführungsbeispiel der vorliegenden Erfindung.

### DETAILLIERTE BESCHREIBUNG VON AUSFÜHRUNGSBEISPIELEN

Es wird darauf verwiesen, dass, obgleich im weiteren Verlauf der Begriff "Achse" verwendet wird, dieser Begriff als sowohl den Begriff "Achse" als auch den Begriff "Welle" einschließend auszulegen ist. Es sollen sowohl rotatorische als auch lineare Antriebssysteme umfasst sein. Die in der industriellen Steuerungstechnik übliche Verwendung des Begriffs "Achse" zur Bezeichnung eines elektrischen oder hydraulischen Motors in Verbindung mit einer zugehörigen Ansteuerung bzw. Regeleinrichtung soll ebenfalls umfasst sein.

Weiterhin wird darauf verwiesen, dass die nachstehend beschriebenen Ausführungsbeispiele die Anwendung der Antriebseinrichtung zum Antreiben von mehreren Achsen von Rotorblättern eines Rotors einer Windenergieanlage beschreiben und darstellen. Die vorliegende Erfindung ist jedoch nicht auf diese Anwendung beschränkt, sondern kann überall dort angewendet werden, wo mehrere Achsen anzutreiben sind. Eine derartige Anwendung ist zum Beispiel die Anwendung an zu verstellenden Achsen eines Neigemechanismus von Schienenfahrzeugen mit Neigetechnik, die als die mehreren Achsen dienen.

Nachstehend erfolgt die Beschreibung eines ersten Ausführungsbeispiels der vorliegenden Erfindung.

Es folgt die Beschreibung eines Aufbaus einer Antriebseinrichtung zum Antreiben von mehreren Achsen gemäß dem ersten Ausführungsbeispiel der vorliegenden Erfindung.

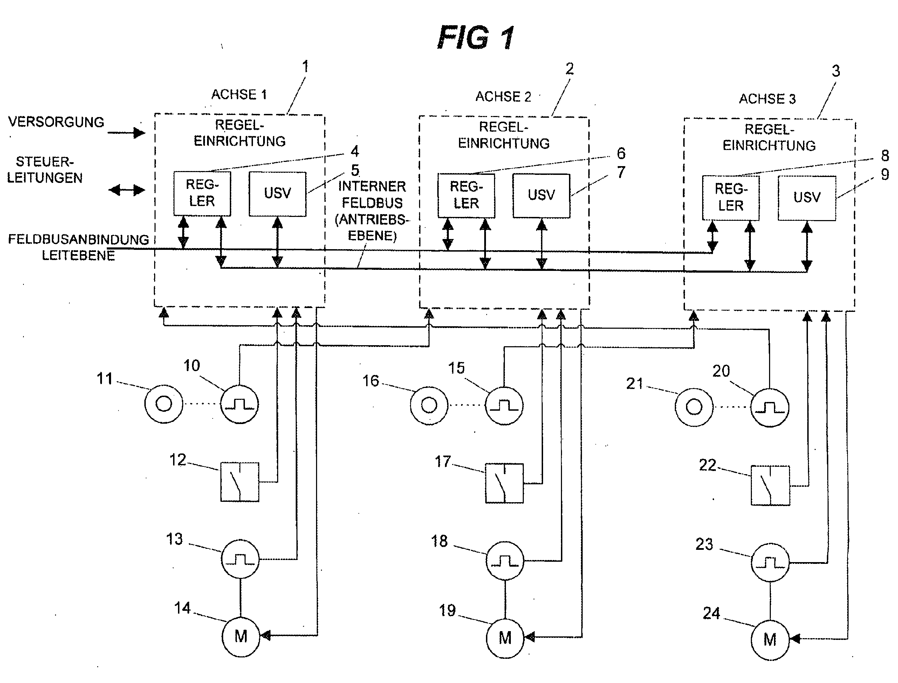

Fig. 1 zeigt eine schematische Ansicht der Antriebseinrichtung zum Antreiben von mehreren Achsen gemäß dem ersten Ausführungsbeispiel der vorliegenden Erfindung.

Wie es in Fig. 1 gezeigt ist, weist die Antriebseinrichtung zum Antreiben von mehreren Achsen eine erste Regeleinrichtung 1, eine zweite Regeleinrichtung 2 und eine dritte Regeleinrichtung 3 auf. Diese ersten bis dritten Regeleinrichtungen 1 bis 3 sind für jeweilige von ersten bis dritten Achsen vorgesehen, die in Fig. 1 mit "Achse 1" bis "Achse 3" angedeutet sind. Die erste Regeleinrichtung 1 weist einen ersten Regler 4 und eine erste unterbrechungsfreie Stromversorgung bzw. USV 5 auf. Die zweite Regeleinrichtung 2 weist einen zweiten Regler 6 und eine zweite USV 7 auf. Die dritte Regeleinrichtung 3 weist einen dritten Regler 8 und eine dritte USV 9 auf.

An der ersten Achse sind ein erster Drehwinkelsensor 10, der einen Drehwinkel einer Mechanik 11 zur Blattverstellung eines Rotorblatts erfasst und ein erstes einen Drehwinkel anzeigendes Signal erzeugt, ein Endschalter 12 und ein zweiter Drehwinkelsensor 13, der einen Drehwinkel eines Elektromotors 14 zur Blattverstellung des Rotorblatts erfasst und ein zweites einen Drehwinkel anzeigendes Signal erzeugt, vorgesehen.

An der zweiten Achse sind ein erster Drehwinkelsensor 15, der einen Drehwinkel einer Mechanik 16 zur Blattverstellung eines Rotorblatts erfasst und ein erstes einen Drehwinkel anzeigendes Signal erzeugt, ein Endschalter 17 und ein zweiter Drehwinkelsensor 18, der einen Drehwinkel eines Elektromotors 19 zur Blattverstellung des Rotorblatts erfasst und ein zweites einen Drehwinkel anzeigendes Signal erzeugt, vorgesehen.

An der dritten Achse sind ein erster Drehwinkelsensor 20, der einen Drehwinkel einer Mechanik 21 zur Blattverstellung eines Rotorblatts erfasst und ein erstes einen Drehwinkel anzeigendes Signal erzeugt, ein Endschalter 22 und ein zweiter Drehwinkelsensor 23, der einen Drehwinkel eines Elektromotors 24 zur Blattverstellung des Rotorblatts erfasst und ein zweites einen Drehwinkel anzeigendes Signal erzeugt, vorgesehen.

Wie es in Fig. 1 gezeigt ist, sind die ersten bis dritten Regler 4, 6 und 8 der ersten bis dritten Regeleinrichtungen 1 bis 3 sowohl mit einer Feldbusanbindung als auch mit einem internen Feldbus verbunden. Die Feldbusanbindung dient zur Anbindung von extern vorgesehenen Komponenten auf Leitebene und der interne Feldbus stellt eine Verbindung auf Antriebsebene dar. Die ersten bis dritten USVs 5, 7 und 9 sind ebenso mit dem internen Feldbus verbunden. Weiterhin sind an den ersten bis dritten Regeleinrichtungen 1 bis 3 jeweilige Anschlüsse für erforderliche Steuerleitungen bzw. für eine erforderliche Energieversorgung vorgesehen.

Die ersten Drehwinkelsensoren 10, 15 und 20 sind mit einer jeweiligen der Mechaniken 11, 16 und 21 zur Blattverstellung eines Rotorblatts der ersten bis dritten Achsen "Achse 1" bis "Achse 3" betrieblich gekoppelt. Weiterhin sind die zweiten Drehwinkelsensoren 13, 18 und 23 mit einem jeweiligen der Elektromotoren 14, 19 und 24 der ersten bis dritten Achsen "Achse 1" bis "Achse 3" verbunden. Die ersten Drehwinkelsensoren 10, 15 und 20, die zweiten Drehwinkelsensoren 13, 18 und 23, die Elektromotoren 14, 19 und 24 und die Endschalter 12, 17, 22 der ersten bis dritten Achsen "Achse 1" bis "Achse 3" sind mit einer jeweiligen der ersten bis dritten Regeleinrichtungen 1 bis 3 der ersten bis dritten Achsen "Achse 1" bis "Achse 3" verbunden.

Es ist anzumerken, dass die zweiten Drehwinkelsensoren 13, 18 und 23, die Elektromotoren 14, 19 und 24 und die Endschalter 12, 17 und 22 der ersten bis dritten Achsen "Achse 1" bis "Achse 3" mit derjenigen der ersten bis dritten Regeleinrichtungen 1 bis 3 verbunden ist, die für die gleiche der ersten bis dritten Achsen "Achse 1" bis "Achse 3" vorgesehen ist, wohingegen der erste Drehwinkelsensor 10 der ersten Achse "Achse 1" mit der zweiten Regeleinrichtung 2 der zweiten Achse "Achse 2" verbunden ist, der erste Drehwinkelsensor 15 der zweiten Achse "Achse 2" mit der dritten Regeleinrichtung 3 der dritten Achse "Achse 3" verbunden ist und der erste Drehwinkelsensor 20 der dritten Achse "Achse 3" mit der ersten Regeleinrichtung 1 der ersten Achse "Achse 1" verbunden ist.

Es folgt die Beschreibung der Funktions- und Wirkungsweise der Antriebseinrichtung zum Antreiben von mehreren Achsen gemäß dem ersten Ausführungsbeispiel der vorliegenden Erfindung.

Wie es zuvor beschrieben worden ist, sind für die ersten bis dritten Achsen "Achse 1" bis "Achse 3" jeweilige erste Drehwinkelsensoren 10, 15 und 20 und jeweilige zweite Drehwinkelsensoren 13, 18 und 23 vorgesehen.

Die zweiten Drehwinkelsensoren 13, 18 und 23 erzeugen jeweils ein einem Drehwinkel der jeweiligen Achse "Achse 1" bis "Achse 3" entsprechendes Signal. Dieses Signal wird der Regeleinrichtung 1 bis 3 der gleichen Achse zugeführt. Die zweiten Drehwinkelsensoren 13, 18 oder 23 und die jeweilige Regeleinrichtung 1,2 oder 3, der das Signal zugeführt ist, sind also der gleichen Achse "Achse 1" bis "Achse 3" zugeordnet. Genauer gesagt wird das zweite einen Drehwinkel anzeigende Signal des zweiten Drehwinkelsensors 13 der ersten Achse "Achse 1" in die erste Regeleinrichtung 1 der ersten Achse "Achse 1" eingegeben, wird das zweite einen Drehwinkel anzeigende Signal des zweiten Drehwinkelsensors 18 der zweiten Achse "Achse 2" in die zweite Regeleinrichtung 2 der zweiten Achse "Achse 2" eingegeben und wird das zweite einen Drehwinkel anzeigende Signal des zweiten Drehwinkelsensors 23 der dritten Achse "Achse 3" in die dritte Regeleinrichtung 3 der dritten Achse "Achse 3" eingegeben. Innerhalb der jeweiligen Achse "Achse 1" bis "Achse 3" entspricht dieser Aufbau einer an sich bekannten, üblichen Regelschleife.

Die ersten Drehwinkelsensoren 10, 15 und 20 erfassen einen Drehwinkel einer Mechanik 11, 16 und 21 zur Blattverstellung eines Rotorblatts einer der ersten bis dritten Achsen "Achse 1" bis "Achse 3" und erzeugen ein erstes einen Drehwinkel der jeweiligen Achse anzeigendes Signal. Für jede der Achsen "Achse 1" bis "Achse 3" gilt: Dieses erste einen Drehwinkel der Achse anzeigende Signal wird der Regeleinrichtung einer der anderen Achsen zugeführt. Genauer gesagt wird das erste einen Drehwinkel anzeigende Signal des ersten Drehwinkelsensors 10 der ersten Achse "Achse 1" in die zweite Regeleinrichtung 2 der zweiten Achse "Achse 2" eingegeben, wird das erste einen Drehwinkel anzeigende Signal des ersten Drehwinkelsensors 15 der zweiten Achse "Achse 2" in die dritte Regeleinrichtung 3 der dritten Achse "Achse 3" eingegeben und wird das erste einen Drehwinkel anzeigende Signal des ersten Drehwinkelsensors 20 der dritten Achse "Achse 3" in die erste Regeleinrichtung 1 der ersten Achse "Achse 1" eingegeben.

Die jeweiligen der ersten und zweiten der den Drehwinkel anzeigenden Signale der ersten Drehwinkelsensoren 10, 15 und 20 und der zweiten Drehwinkelsensoren 13, 18 und 23 der ersten bis dritten Achsen "Achse 1" bis "Achse 3" werden in jeweilige der Regler 4, 6 und 8 der ersten bis dritten Regeleinrichtungen 1 bis 3 eingegeben. Die derart eingegebenen Signale werden dann in diesen Reglern 4, 6 und 8 verarbeitet. Die Regler 4, 6 und 8 dienen dazu, ein Steuersignal für einen jeweiligen der Elektromotoren 14, 19 und 24 zu erzeugen und zu diesem auszugeben, der für die gleiche der ersten bis dritten Achsen "Achse 1" bis "Achse 3" wie ein jeweiliger der Regler 4, 6 und 8 vorgesehen ist, um dadurch ein jeweiliges über eine jeweilige Mechanik 11, 16 und 21 mit einem der Elektromotoren 14, 19 und 24 gekoppeltes Rotorblatt zu verstellen.

Anders ausgedrückt erhält jede Regeleinrichtung ein Drehwinkelsignal einer ihr antriebsmässig zugeordneten Achse zum Ausführen einer Regelfunktion sowie einer Eigenüberwachung sowie zusätzlich ein zusätzliches Drehwinkelsignal einer anderen, vorzugsweise benachbarten, Achse, wie es aus Figur 1 ersichtlich ist.

Dadurch, dass in jeden der Regler 4, 6 und 8 der ersten bis dritten Achsen "Achse 1" bis "Achse 3" ein erstes einen Drehwinkel anzeigendes Signal von einem der ersten Drehwinkelsensoren 10, 15 und 20 einer anderen der ersten bis dritten Achsen "Achse 1" bis "Achse 3" und ein zweites einen Drehwinkel anzeigendes Signal von einem der zweiten Drehwinkelsensoren 13, 18 und 23 der gleichen der ersten bis dritten Achsen "Achse 1" bis "Achse 3" eingegeben wird, können jeweilige der ersten und zweiten einen Drehwinkel anzeigende Signale der ersten Drehwinkelsensoren 10, 15 und 20 und der zweiten Drehwinkelsensoren 13, 18 und 23 in einem jeweiligen der Regler 4, 6 und 8 ausgewertet werden. Dies bedeutet, dass sich Antriebe von jeweiligen der ersten bis dritten Achsen "Achse 1" bis "Achse 3" gegenseitig auf Fehler überprüfen können. Insbesondere unterliegen die einzelnen Regler 4, 6 und 8 dadurch jeweils einer Überwachung durch ein externes Gerät, das heißt einem der anderen Regler 4, 6 und 8.

Wie es zuvor erwähnt worden ist, sind die Regler 4, 6 und 8 der ersten bis dritten Regeleinrichtungen 1 bis 3 über den internen Feldbus auf Antriebsebene verbunden. Über diesen internen Feldbus können die Regler 4, 6 und 8 untereinander zum Beispiel Statusmeldungen, jeweilige Sollwerte und/oder jeweilige Istwerte von erforderlichen Signalen und/oder Parametern usw. austauschen, um zum Beispiel eine gegenseitige Funktionsüberprüfung durchzuführen. Dadurch besteht die Möglichkeit, zum Beispiel eine Übereinstimmung von Ausgangssignalen von zwei Drehwinkelsensoren einer jeweiligen Achse oder von zwei unterschiedlichen Achsen, eine Übereinstimmung eines Istwerts mit einem Sollwert eines jeweiligen einen Drehwinkel anzeigenden Signals usw. innerhalb eines gewissen Schleppfehlers oder einen Betriebszustand zu überprüfen. Weiterhin stellt der interne Feldbus der Antriebsebene zusätzlich einen redundanten Kommunikationsweg dar, über welchen Daten aus der Leitebene zwischen den Reglern 4, 6 und 8 übertragen werden können, solange einer der Regler 4, 6 und 8 eine funktionsfähige Feldbusanbindung an die Leitebene aufweist.

Die Regler 4, 6 und 8 sind üblicherweise als digitale Regelgeräte ausgeführt. Diese beinhalten einen Mikrokontroller auf dem eine Reglersoftware ausgeführt wird. Diese Reglersoftware wird vorzugsweise durch ein Überwachungsmodul ergänzt, welches die beschriebene Überwachung einer anderen Achse anhand des zugeführten Drehwinkelsignals ausführt. Insbesondere bei analogen Regelgeräten kann die Überwachungsfunktion auch durch eine in dem Regelgerät vorhandene elektronische Schaltung ausgeführt werden. In beiden Fällen können für jede Regelachse gleichartig aufgebaute Regelgeräte verwendet werden. Dies wirkt sich aufgrund einer geringen Typenvielfalt günstig auf die Lagerhaltungs- und Herstellungskosten der Regelgeräte aus.

Die Regler 4, 6 und 8, insbesondere die Überwachungsmodule, sind an einen eigenen physikalischen Kommunikationskanal (nicht dargestellt) angebunden, der alleine dem Zweck dient, einen schweren Fehlerfall zu signalisieren. Dieser wird auch als Reißleine bezeichnet. Meldet ein Regler 4, 6 und 8, oder eine andere Systemkomponente einen Fehlerfall auf die Reißleine, so versetzen die funktionsfähigen Komponenten die Anlage unverzüglich in einen sicheren Zustand.

Anhand der zuvor beschriebenen Funktionsüberprüfung besteht demgemäß zum Beispiel die Möglichkeit, die Rotorblätter des Rotors der Windenergieanlage nach Erfassen einer fehlerhaften Funktion in eine Fahnenstellung zu bringen. Die Endschalter 12, 17 und 22 der ersten bis dritten Achsen "Achse 1" bis "Achse 3" sind dazu vorgesehen, eine Abschaltung vorzunehmen, wenn die Fahnenstellung der jeweiligen Rotorblätter des Rotors der Windenergieanlage erreicht ist. Die Fahnenstellung bezeichnet hierbei eine Stellung, in welcher ein jeweiliges Rotorblatt dem auf das Rotorblatt wirkenden Wind einen geringst möglichen Widerstand entgegensetzt. Zudem bremst ein Rotorblatt, welches sich in der Fahnenstellung befindet, den Rotor aerodynamisch ab.

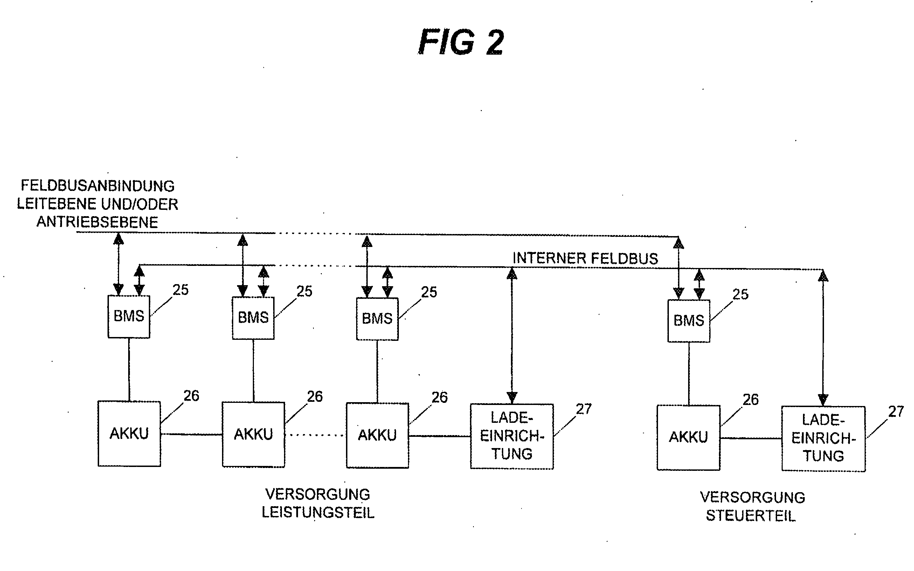

Fig. 2 zeigt eine schematische Ansicht einer unterbrechungsfreien Stromversorgung der Antriebseinrichtung zum Antreiben von mehreren Achsen gemäß dem ersten Ausführungsbeispiel der vorliegenden Erfindung.

Es ist anzumerken, dass die in Fig. 2 gezeigte unterbrechungsfreie Stromversorgung als jede der in Fig. 1 gezeigten unterbrechungsfreien Stromversorgungen 5, 7 und 9 angewendet werden kann.

Die unterbrechungsfreie Stromversorgung beinhaltet Batteriemanagementsysteme bzw. Batterieverwaltungssysteme bzw. BMS 25, Akkumulatoreinheiten bzw. Akkus 26 und Ladeeinrichtungen 27.

Im dargestellten Ausführungsbeispiel ist die USV in eine Versorgung für das Leistungsteil eines Reglers und in eine Versorgung für das Steuerteil eines Reglers unterteil. Die Versorgung für das Leistungsteil beinhaltet zum Beispiel zwölf BMS 25 und zwölf Akkus 26, wobei eine jeweilige BMS 25 mit einem jeweiligen Akku 26 verbunden ist. Bei einer Spannung der Akkumulatoreinheit von 25 V ergibt sich eine Versorgungsspannung von 300 V für die Notversorgung des Leistungsteils. Zur Versorgung des Steuerteils ist zum Beispiel eine Spannung von 25 V ausreichend, die von einer Akkumulatoreinheit aufgebracht wird. Diese ist ebenfalls mit einem BMS 25 ausgestattet. Die BMS 25 sind sowohl mit einem internen Feldbus verbunden als auch über eine Feldbusanbindung mit der Leitebene und/oder Antriebsebene verbunden. Die Ladeeinrichtungen 27 sind ebenso über die interne Feldbusanbindung mit den BMS 25 verbunden.

Die in der unterbrechungsfreien Stromversorgung verwendeten Akkus 25 sind Lithiumionen-Akkus, bei denen im Gegensatz zu bisher verwendeten Blei-Gel-Akkus kein sogenanntes Gasen stattfindet. Weiterhin weisen derartige Lithiumionen-Akkus verglichen mit Blei-Gel-Akkus ein geringeres Gewicht auf. Wie es aus Fig. 1 ersichtlich ist, ist eine derartige unterbrechungsfreie Stromversorgung dezentral für jede der ersten bis dritten Achsen "Achse 1" bis "Achse 3" vorgesehen, wodurch eine Notstromversorgung der ersten bis dritten Regeleinrichtungen 1 bis 3 in das Redundanzkonzept einbezogen werden kann.

Nachstehend erfolgt die Beschreibung eines zweiten Ausführungsbeispiels der vorliegenden Erfindung.

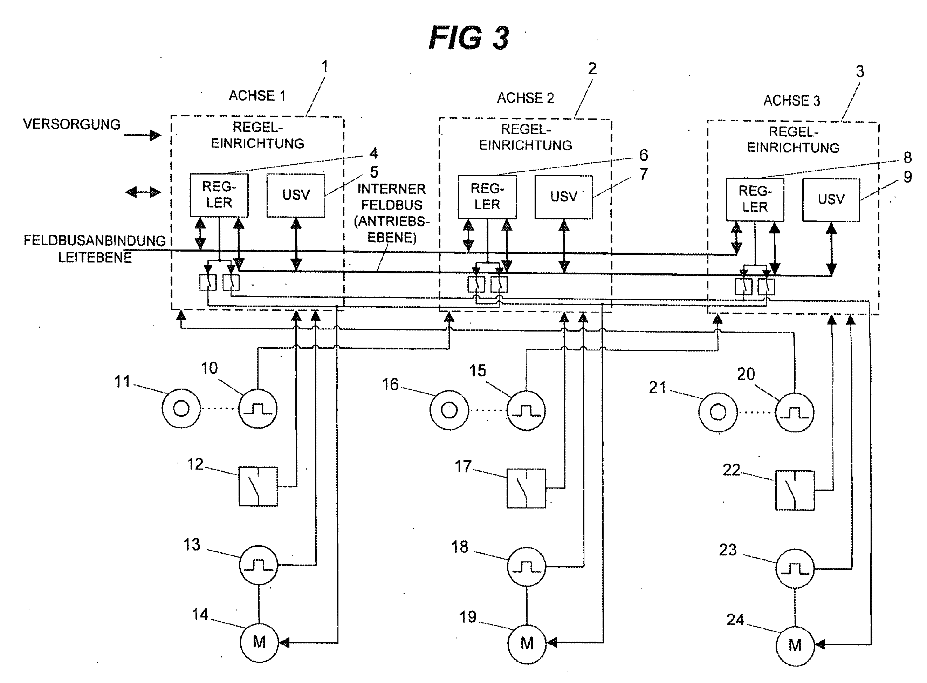

Fig. 3 zeigt eine schematische Ansicht der Antriebseinrichtung zum Antreiben von mehreren Achsen gemäß dem zweiten Ausführungsbeispiel der vorliegenden Erfindung.

Das zweite Ausführungsbeispiel der vorliegenden Erfindung ist ausgenommen der nachstehend beschriebenen Änderungen identisch zu dem ersten Ausführungsbeispiel der vorliegenden Erfindung, wobei gleiche Bezugszeichen wie in Fig. 1 in Fig. 3 die gleichen Bauteile bezeichnen.

Wie es in Fig. 3 gezeigt ist, beinhaltet die Antriebseinrichtung zum Antreiben von mehreren Achsen gemäß dem zweiten Ausführungsbeispiel weiterhin zwei Schalter in jeder der ersten bis dritten Regeleinrichtungen 1 bis 3. Diese Schalter dienen dazu, dass jeder Regler 4, 6 und 8 nicht nur einen ihm normal zugeordneten der Motoren 14, 19 und 24 ansteuern kann, sondern auch einen der Motoren 14, 19 und 24 der ersten bis dritten Achse "Achse 1" bis "Achse 3", deren erstes einen Drehwinkel anzeigende Signal der ersten Drehwinkelsensoren 10, 15 und 20 der jeweilige Regler einliest. Genauer gesagt kann die erste Regeleinrichtung 1 den Motor 14 der ersten Achse "Achse 1" oder den Motor 24 der dritten Achse "Achse 3" ansteuern, kann die zweite Regeleinrichtung 2 den Motor 19 der zweiten Achse "Achse 2" oder den Motor 14 der ersten Achse "Achse 1" ansteuern und kann die dritte Regeleinrichtung 3 den Motor 24 der dritten Achse "Achse 3" oder den Motor 19 der zweiten Achse "Achse 2" ansteuern.

Durch abwechselndes Ansteuern von zwei der Motoren 14, 19 und 24 mittels einer der ersten bis dritten Regeleinrichtungen 1 bis 3 kann auch bei einer fehlerhaften Funktion einer anderen der ersten bis dritten Regeleinrichtungen 1 bis 3 ein Betrieb mit geringerer Regelgeschwindigkeit und/oder Leistung aufrecht erhalten werden. Bei einem vollständigen Ausfall einer der ersten bis dritten Regeleinrichtungen 1 bis 3 ist immer noch ein gesteuertes Rückstellen eines betroffenen Rotorblatts in die Fahnenstellung möglich.

Obgleich in den zuvor beschriebenen Ausführungsbeispielen bestimmte Anzahlen von bestimmten Bauteilen beschrieben worden sind, ist die vorliegende Erfindung nicht auf diese Anzahlen beschränkt, sondern es können für einen jeweiligen Verwendungszweck zweckmäßige Anzahlen von jeweiligen Bauteilen verwendet werden. Führen die Achsen eine lineare Bewegung anstelle einer Rotationsbewegung gegebenenfalls unter Einsatz zum Beispiel eines Spindelantriebs aus, können anstelle der Drehwinkelsensoren natürlich auch lineare Positionssensoren zum Einsatz kommen.

Bezüglich weiterer Merkmale und Vorteile der vorliegenden Erfindung wird ausdrücklich auf die Offenbarung der Zeichnung verwiesen.

## Patentansprüche

1. Antriebseinrichtung zum Antreiben von zumindest einer ersten und einer zweiten Achse (Achse 1, Achse 2)und mit einer ersten Regeleinrichtung (1, ), durch die zumindest die erste Achse (Achse 1) einer Antriebsregelung unterwerfbar ist, und mit einer zweiten Regeleinrichtung (2), durch die zumindest die zweite Achse (Achse 2) einer Antriebsregelung unterwerfbar ist,
**dadurch gekennzeichnet, dass**
ein Positionssensor (15) zur Erfassung einer Position der zweiten Achse ( Achse2) vorgesehen ist, wetcher ein Erfassungssignal des Positionssensors (15) der ersten Regeleinrichtung (1) zuführt.

2. Antriebseinrichtung nach Anspruch 1, **dadurch gekennzeichnet, dass** ein Positionsensor (10) zur Erfassung einer Position der ersten Achse (Achse 1) vorgesehen ist, welcher das Erfassungssignal des weiteren Positionsensors (10) der zweiten Regeleinrichtung (2) zugeführt.

3. Antriebseinrichtung nach Anspruch 1 oder 2, **dadurch gekennzeichnet, dass** zumindest eine weitere Achse (Achse 3) mit einer ihr im Sinne einer Antriebsregelung zugeordneten Regeleinrichtung (3) vorhanden ist, dass an jeder der besagten Achsen (Achse 1, Achse 2, Achse 3) zusätzlich zu der ihr zugeordneten Regeleinrichtung (1, 2, 3) ein Positionssensor (10, 15, 20) zur Erfassung der Position dieser Achse vorhanden ist, und dass ein Erfassungssignal des jeweiligen Positionssensors (10, 15, 20) einer anderen Regeleinrichtung (1, 2, 3) zugeführt ist als derjenigen, welche dieser Achse (Achse 1, Achse 2, Achse 3) zugeordnet ist.

4. Antriebsvorrichtung nach Anspruch 3, **dadurch gekennzeichnet, dass** die Erfassungssignale der zusätzlich vorhandenen Positionssensoren (10, 15, 20) reihum jeweils einer anderen als der der jeweiligen Achse (Achse 1, Achse 2, Achse 3) zugeordneten Regeleinrichtung (1, 2, 3) zugeordnet sind.

5. Antriebseinrichtung nach einem der Ansprüche 1 bis 4, **dadurch gekennzeichnet, dass** zumindest die erste Regeleinrichtung (1, 2, 3) eine Überwachungseinrichtung aufweist, der zumindest das Erfassungssignal bezüglich der Position der zweiten Achse (Achse 1, Achse 2, Achse 3) zugeführt ist und mit der eine Fehlfunktion der zweiten Regeleinrichtung (1, 2, 3) auf der Grundlage des Erfassungssignals feststellbar ist.

6. Antriebseinrichtung nach Anspruch 5, **dadurch gekennzeichnet, dass** der Überwachungseinrichtung neben dem Erfassungssignal zumindest eines der folgenden Signale zugeführt ist: ein Statussignal der zweiten Regeleinrichtung (1, 2, 3), ein durch die zweite Regeleinrichtung (1, 2, 3) erfasster Positions-Istwert, ein der zweiten Regeleinrichtung (1, 2, 3) zugeführter Sollwert, ein der ersten Regeleinrichtung (1, 2, 3) zugeführter Sollwert.

7. Antriebseinrichtung nach Anspruch 5 oder 6, **dadurch gekennzeichnet, dass** auch die der zweiten und/oder die den weiteren Achsen (Achse 1, Achse 2, Achse 3) zugeordneten Regeleinrichtungen (1, 2, 3) jeweils eine Überwachungseinrichtung zur Überwachung einer der anderen Achsen (1, 2, 3) aufweisen.

8. Antriebseinrichtung nach einem der Ansprüche 5 bis 7, **dadurch gekennzeichnet, dass** die Überwachungseinrichtung an einen separaten physikalischen Kommunikationskanal angebunden ist, über den eine Fehlfunktion der Antriebseinrichtung, insbesondere eine Fehlfunktion der überwachten Regeleinrichtung (1, 2, 3) signalisierbar ist.

9. Antriebseinrichtung nach einem der Ansprüche 1 bis 8, **dadurch gekennzeichnet, dass** wenigstens die erste Regeleinrichtung (1, 2, 3) eine Schaltvorrichtung aufweist, durch die eine von der ersten Regeleinrichtung (1, 2, 3) ausgegebene Stellgröße einer anderen der Achsen (Achse 1, Achse 2, Achse 3) als der ersten Achse (Achse 1, Achse 2, Achse 3) zuführbar ist.

10. Antriebseinrichtung nach einem der Ansprüche 1 bis 9, **dadurch gekennzeichnet, dass** Regeleinrichtungen (1, 2,3) zur Kommunikation miteinander verbunden sind.

11. Antriebseinrichtung nach Anspruch 10, **dadurch gekennzeichnet, dass** Regeleinrichtungen (1, 2, 3) über einen Feldbus auf einer Antriebsebene verbunden sind.

12. Antriebseinrichtung nach Anspruch 11, **dadurch gekennzeichnet, dass** mindestens eine Regeleinrichtung (1, 2, 3) mit einer Leitebene verbunden ist und Daten aus der Leitebene über den Feldbus auf der Antriebsebene zwischen Regeleinrichtungen (1, 2, 3) übertragen werden.

13. Antriebseinrichtung nach einem der Ansprüche 1 bis 13, **dadurch gekennzeichnet, dass** Regeleinrichtungen (1, 2, 3) jeweils voneinander getrennt für von ihnen anzutreibende Achsen (Achse 1, Achse 2, Achse 3) vorgesehen sind.

14. Antriebseinrichtung nach Anspruch 13, **dadurch gekennzeichnet, dass** Regeleinrichtungen (1, 2, 3) alle Steuer-, Überwachungs- und Regelfunktionen durchführen, die für von ihnen anzutreibende Achsen (Achse 1, Achse 2, Achse 3) erforderlich sind.

15. Antriebseinrichtung nach Anspruch 13 oder 14, **dadurch gekennzeichnet, dass** jeweils voneinander getrennte Regeleinrichtungen (1, 2, 3) jeweils voneinander getrennte Energieversorgungseinrichtungen (5, 7, 9) aufweisen, wobei einer Regeleinrichtung (1, 2, 3) eine Energieversorgungseinrichtung (5, 7, 9) zugeordnet ist.

16. Antriebseinrichtung nach Anspruch 15, **dadurch gekennzeichnet, dass** Energieversorgungseinrichtungen unterbrechungsfreie Stromversorgungen (5, 7, 9) aufweisen.

17. Antriebseinrichtung nach einem der Ansprüche 1 bis 16, **dadurch gekennzeichnet, dass** die besagten Achsen (Achse 1, Achse 2, Achse 3) Achsen von zu verstellenden Rotorblättern einer Windkraftanlage sind.

18. Vorrichtung nach einem der Ansprüche 1 bis 17, **dadurch gekennzeichnet, dass** die besagten Achsen (Achse 1, Achse 2, Achse 3) zu verstellende Achsen eines Neigemechanismus von Schienenfahrzeugen mit Neigetechnik sind.

## Claims

1. Drive device for driving at least a first and a second axle (axle 1, axle 2) and having a first closed-loop control device (1) by means of which at least the first axle (axle 1) can be subjected to a closed-loop drive control, and having a second closed-loop control device (2) by means of which at least the second axle (axle 2) can be subjected to a closed-loop drive control,
**characterized in that**
a position sensor (15) for sensing a position of the second axle (axle 2) is provided which feeds a sensing signal of the position sensor (15) to the first closed-loop control device (1).

2. Drive device according to Claim 1, **characterized in that** a position sensor (10) for sensing a position of the first axle (axle 1) is provided which feeds the sensing signal of the further position sensor (10) to the second closed-loop control device (2).

3. Drive device according to Claim 1 or 2, **characterized in that** at least one further axle (axle 3) with a closed-loop control device (3) which is assigned thereto in the sense of a closed-loop drive control is present, **in that** on each of said axles (axle 1, axle 2, axle 3) there is, in addition to the closed-loop control device (1, 2, 3) which is assigned to it, a position sensor (10, 15, 20) for sensing the position of said axle, and **in that** a sensing signal of the respective position sensor (10, 15, 20) is fed to another closed-loop control device (1, 2, 3) than that which is assigned to this axle (axle 1, axle 2, axle 3) .

4. Drive device according to Claim 3, **characterized in that** the sensing signals of the additionally present position sensors (10, 15, 20) are assigned around in each case another closed-loop control device (1, 2, 3) than that assigned to the respective axle (axle 1, axle 2, axle 3).

5. Drive device according to one of Claims 1 to 4, **characterized in that** at least the first closed-loop control device (1, 2, 3) has a monitoring device to which at least the sensing signal relating to the position of the second axle (axle 1, axle 2, axle 3) is fed and with which a malfunction of the second closed-loop control device (1, 2, 3) can be detected on the basis of the sensing signal.

6. Drive device according to Claim 5, **characterized in that** the monitoring device is fed, in addition to the sensing signal, at least one of the following signals: a status signal of the second closed-loop control device (1, 2, 3), a position actual value which is sensed by means of the second closed-loop control device (1, 2, 3), a setpoint value which is fed to the second closed-loop control device (1, 2, 3), and a setpoint value which is fed to the first closed-loop control device (1, 2, 3).

7. Drive device according to Claim 5 or 6, **characterized in that** the closed-loop control devices (1, 2, 3) which are assigned to the second and/or the further axles (axle 1, axle 2, axle 3) each also have a monitoring device for monitoring one of the other axles (1, 2, 3).

8. Drive device according to one of Claims 5 to 7, **characterized in that** the monitoring device is connected to a separate physical communication channel via which a malfunction of the drive device, in particular a malfunction of the monitored closed-loop control device (1, 2, 3), can be signalled.

9. Drive device according to one of Claims 1 to 8, **characterized in that** at least the first closed-loop control device (1, 2, 3) has a switching apparatus by means of which a manipulated variable which is output by the first closed-loop control device (1, 2, 3) can be fed to another of the axles (axle 1, axle 2, axle 3) than the first axle (axle 1, axle 2, axle 3).

10. Drive device according to one of Claims 1 to 9, **characterized in that** closed-loop control devices (1, 2, 3) are connected to one another for the purpose of communication.

11. Drive device according to Claim 10, **characterized in that** closed-loop control devices (1, 2, 3) are connected via a field bus on a drive level.

12. Drive device according to Claim 11, **characterized in that** at least one closed-loop control device (1, 2, 3) is connected to a command level, and data from the command level is transmitted between closed-loop control devices (1, 2, 3) via the field bus on the drive level.

13. Drive device according to one of Claims 1 to 13, **characterized in that** closed-loop control devices (1, 2, 3) are each provided separately from one another for axles (axle 1, axle 2, axle 3) which are to be driven by them.

14. Drive device according to Claim 13, **characterized in that** closed-loop control devices (1, 2, 3) carry out all the open-loop control functions, monitoring functions and closed-loop control functions which are necessary for axles (axle 1, axle 2, axle 3) which are to be driven by them.

15. Drive device according to Claim 13 or 14, **characterized in that** in each case closed-loop control devices (1, 2, 3) which are separate from one another have in each case energy supply devices (5, 7, 9) which are separate from one another, wherein an energy supply device (5, 7, 9) is assigned to a closed-loop control device (1, 2, 3).

16. Drive device according to Claim 15, **characterized in that** energy supply devices have interruption-free power supplies (5, 7, 9).

17. Drive device according to one of Claims 1 to 16, **characterized in that** said axles (axle 1, axle 2, axle 3) are axles of rotor blades, to be adjusted, of a wind turbine.

18. Apparatus according to one of Claims 1 to 17, **characterized in that** said axles (axle 1, axle 2, axle 3) are axles, to be adjusted, of a tilting mechanism of rail vehicles with tilting technology.

## Revendications

1. Dispositif d'entraînement destiné à entraîner au moins un premier et un deuxième axe (axe 1, axe 2) et doté d'un premier dispositif de régulation (1) par lequel une régulation d'entraînement peut être appliquée au moins sur le premier axe (axe 1), et d'un deuxième dispositif de régulation (2) qui permet d'appliquer une régulation d'entraînement au moins sur le deuxième axe (axe 2),
**caractérisé en ce que**
un capteur (15) de position est prévu pour saisir une position du deuxième axe (axe 2) et
**en ce qu'**un signal de saisie du capteur (15) de position est amené au premier dispositif de régulation (1).

2. Dispositif d'entraînement selon la revendication 1, **caractérisé en ce qu'**un capteur (10) de position destiné à la saisie de la position du premier axe (axe 1) est prévu et **en ce que** le signal de saisie de l'autre capteur (10) de position est amené au deuxième dispositif de régulation (2).

3. Dispositif d'entraînement selon les revendications 1 ou 2, **caractérisé en ce qu'**au moins un autre axe (axe 3) est prévu et présente un dispositif de régulation (3) associé à une régulation d'entraînement, **en ce qu'**un capteur (10, 15, 20) de position qui saisit la position de cet axe est prévu sur chacun desdits axes (axe 1, axe 2, axe 3) en plus du dispositif de régulation (1, 2, 3) qui leur est associé et **en ce qu'**un signal de saisie de chaque capteur (10, 15, 20) de position est amené à un dispositif de régulation (1, 2, 3) autre que celui qui est associé à cet axe (axe 1, axe 2, axe 3).

4. Ensemble d'entraînement selon la revendication 3, **caractérisé en ce que** les signaux de saisie des capteurs (10, 15, 20) de position prévus en supplément sont associés à des dispositifs de régulation (1, 2, 3) respectifs autres que celui associé à chaque axe (axe 1, axe 2, axe 3).

5. Dispositif d'entraînement selon l'une des revendications 1 à 4, **caractérisé en ce qu'**au moins le premier dispositif de régulation (1, 2, 3) présente un dispositif de surveillance auquel au moins le signal de saisie de position du deuxième axe (axe 1, axe 2, axe 3) est amené et par lequel un fonctionnement défectueux du deuxième dispositif de régulation (1, 2, 3) peut être détecté sur la base du signal de saisie.

6. Dispositif d'entraînement selon la revendication 5, **caractérisé en ce qu'**en plus du signal de saisie, au moins l'un des signaux suivants est amené au dispositif de surveillance : un signal d'état du deuxième dispositif de régulation (1, 2, 3), une valeur effective de position saisie par le deuxième dispositif de régulation (1, 2, 3), une valeur de consigne amenée au deuxième dispositif de régulation (1, 2, 3) et une valeur de consigne amenée au premier dispositif de régulation (1, 2, 3).

7. Dispositif d'entraînement selon les revendications 5 ou 6, **caractérisé en ce que** les dispositifs de régulation (1, 2, 3) associés au deuxième et/ou aux autres axes (axe 1, axe 2, axe 3) présentent également chacun un dispositif de surveillance permettant la surveillance de l'un des autres axes (1, 2, 3).

8. Dispositif d'entraînement selon l'une des revendications 5 à 7, **caractérisé en ce que** le dispositif de surveillance est raccordé à un canal de communication physiquement séparé par lequel un défaut de fonctionnement du dispositif d'entraînement et en particulier un défaut de fonctionnement du dispositif de régulation (1, 2, 3) surveillé peuvent être signalés.

9. Dispositif d'entraînement selon l'une des revendications 1 à 8, **caractérisé en ce qu'**au moins le premier dispositif de régulation (1, 2, 3) présente un circuit par lequel une grandeur de réglage délivrée par le premier dispositif de régulation (1, 2, 3) peut être amenée à un axe (axe 1, axe 2, axe 3) différent du premier axe (axe 1, axe 2, axe 3).

10. Dispositif d'entraînement selon l'une des revendications 1 à 9, **caractérisé en ce que** les dispositifs de régulation (1, 2, 3) sont raccordés les uns aux autres de manière à pouvoir communiquer.

11. Dispositif d'entraînement selon la revendication 10, **caractérisé en ce que** des dispositifs de régulation (1, 2, 3) sont raccordés par un bus de terrain à un niveau d'entraînement.

12. Dispositif d'entraînement selon la revendication 11, **caractérisé en ce qu'**au moins un dispositif de régulation (1, 2, 3) est raccordé à un niveau de conduite et **en ce que** des données du niveau de conduite sont transmises par le bus de terrain au niveau d'entraînement entre les dispositifs de régulation (1, 2, 3).

13. Dispositif d'entraînement selon l'une des revendications 1 à 13, **caractérisé en ce que** les dispositifs de régulation (1, 2, 3) sont prévus séparément les uns des autres pour les axes (axe 1, axe 2, axe 3) qu'ils entraînent.

14. Dispositif d'entraînement selon la revendication 13, **caractérisé en ce que** les dispositifs de régulation (1, 2, 3) exécutent toutes les fonctions de commande, de surveillance et de régulation nécessaires pour les axes (axe 1, axe 2, axe 3) qu'ils entraînent.

15. Dispositif d'entraînement selon les revendications 13 ou 14, **caractérisé en ce que** des dispositifs de régulation (1, 2, 3) séparés les uns des autres présentent des dispositifs distincts (5, 7, 9) d'alimentation en énergie, un dispositif (5, 7, 9) d'alimentation en énergie étant associé à un dispositif de régulation (1, 2, 3).

16. Dispositif d'entraînement selon la revendication 15, **caractérisé en ce que** les dispositifs d'alimentation en énergie présentent des alimentations en courant (5, 7, 9) protégées contre les interruptions.

17. Dispositif d'entraînement selon l'une des revendications 1 à 16, **caractérisé en ce que** lesdits axes (axe 1, axe 2, axe 3) sont des axes de pales de rotor ajustables d'une installation éolienne.

18. Ensemble selon l'une des revendications 1 à 17, **caractérisé en ce que** lesdits axes (axe 1, axe 2, axe 3) sont des axes à ajuster d'un mécanisme d'inclinaison de véhicule ferroviaire doté d'une technologie d'inclinaison.
